# EUROPÄISCHE PATENTANMELDUNG

(11) **EP 4 606 953 A1**
(43) Veröffentlichungstag der Anmeldung: **27.08.2025**
(21) Anmeldenummer: 25158910.7
(22) Anmeldetag: 19.02.2025
(51) Int. Cl.: E02B 8/02

(54) **SIEBVORRICHTUNG**

(30) Priorität: 20.02.2024 DE 102024104656
(71) Anmelder: Huber SE, 92334 Berching (DE)
(72) Erfinder: Beck, Andreas, 92318 Neumarkt (DE)
(74) Vertreter: Canzler & Bergmeier Patentanwälte Partnerschaft mbB

(57) **Zusammenfassung**

Die Erfindung betrifft eine Siebvorrichtung (1) zum Abscheiden von Verunreinigungen (2) und Wassertieren (3) aus einem strömenden Abwasser (4), mit mehreren Siebelementen (5), die entlang einer Bewegungsrichtung (6) aneinander angereiht sind und ein umlaufendes Endlossiebband (7) bilden, mit einer oberen Umlenkung (8) und einer unteren Umlenkung (9), mit deren Hilfe das Endlossiebband (7) umgelenkt wird, so dass im bestimmungsgemä-ßen Gebrauch der Siebvorrichtung (1) an einer ersten Seite (10) der Siebvorrichtung (1) die Siebelemente (5) in eine Hochrichtung (HR) aufwärts und an einer zweiten Seite (11) der Siebvorrichtung (1) die Siebelemente (5) entgegen der Hochrichtung (HR) abwärts bewegt werden, mit wenigstens einer ersten Auffangeinrichtung (12) für die Verunreinigungen (2), und mit wenigstens einer separaten zweiten Auffangeinrichtung (13) für die Wassertiere (3), wobei die obere Umlenkung (8) ein Umlenkelement (14) umfasst, und wobei die wenigstens eine erste Auffangeinrichtung (12) zumindest teilweise im Bereich des Umlenkelements (14) und/oder entlang der Hochrichtung (HR) unterhalb des Umlenkelements (14) angeordnet ist. Die wenigstens eine erste Auffangeinrichtung (12) und die wenigstens eine zweite Auffangeinrichtung (13) sind entlang einer Querrichtung (QR) nebeneinander angeordnet.

## Beschreibung

Die vorliegende Erfindung betrifft eine Siebvorrichtung zum Abscheiden von Verunreinigungen und Wassertieren aus einem strömenden Abwasser, mit mehreren Siebelementen, die entlang einer Bewegungsrichtung aneinander angereiht sind und ein umlaufendes Endlossiebband bilden, mit einer oberen Umlenkung und einer unteren Umlenkung, mit deren Hilfe das Endlossiebband umgelenkt wird, so dass im bestimmungsgemäßen Gebrauch der Siebvorrichtung an einer ersten Seite der Siebvorrichtung die Siebelemente in eine Hochrichtung aufwärts und an einer zweiten Seite der Siebvorrichtung die Siebelemente entgegen der Hochrichtung abwärts bewegt werden, mit wenigstens einer ersten Auffangeinrichtung für die Verunreinigungen, und mit wenigstens einer separaten zweiten Auffangeinrichtung für die Wassertiere, wobei die obere Umlenkung ein Umlenkelement umfasst, mit dessen Hilfe das Endlossiebband im bestimmungsgemäßen Gebrauch der Siebvorrichtung an der ersten Seite der Siebvorrichtung aufgenommen und in Richtung der zweiten Seite der Siebvorrichtung umgelenkt wird und wobei die wenigstens eine erste Auffangeinrichtung zumindest teilweise im Bereich des Umlenkelements und/oder entlang der Hochrichtung unterhalb des Umlenkelements angeordnet ist.

Aus der US 4,199,453 A ist eine Vorrichtung zum Schutz von Wassertieren bekannt, die vom Abwasser durch eine vertikale, sich bewegende Siebbandeinheit mit sich nach innen öffnenden Siebkörben getragen werden. Die Vorrichtung umfasst eine Abflussrinne für die Wassertiere und eine Hauptabflussrinne für die Verunreinigungen, wobei diese übereinander angeordnet sind bzw. sich überlappen. Nachteilig hieran ist, dass Verunreinigungen sehr einfach mit den Wassertieren in die Abflussrinne gelangen bzw. zusätzliche Mittel benötigt werden, dies zu verhindern. Eine ausreichende Trennung der Wassertiere und der Verunreinigungen kann nicht gewährleistet werden. Auch ist es möglich, dass hierdurch die Wassertiere durch die Verunreinigungen verletzt werden. Ebenso ist durch die hierin offenbarte Vorrichtung nicht sichergestellt, dass die Wassertiere in die Abflussrinne geführt oder an dieser vorbeigeführt werden.

Aufgabe der vorliegenden Erfindung ist es, die aus dem Stand der Technik bekannten Nachteile zu beseitigen. Aufgabe ist es insbesondere, eine Siebvorrichtung zu schaffen, bei deren Verwendung die Wassertiere geschützter und/oder effizienter ausgetragen werden können. Zusätzlich oder alternativ ist es Aufgabe der Erfindung, den Austrag und/oder das Sammeln der Wassertiere auch mit sehr geringer Kammeröffnung, insbesondere mit der kleinsten Kammeröffnung, zu realisieren und/oder die Herstellung der Siebvorrichtung zu vereinfachen.

Die Aufgabe wird gelöst durch eine Siebvorrichtung mit den Merkmalen der unabhängigen Patentansprüche. Vorteilhafte oder bevorzugte Ausführungen oder Weiterbildungen der Erfindung sind durch die Merkmale der abhängigen Ansprüche gekennzeichnet.

Vorgeschlagen wird eine Siebvorrichtung zum Abscheiden von Verunreinigungen, insbesondere von Feststoffen und Wassertieren, insbesondere von Fischen, aus einem strömenden Abwasser. Derartige Siebvorrichtungen können auch Bandrechen oder Siebbandmaschine genannt werden. Vorzugsweise durchströmt das Abwasser die Siebvorrichtung von innen nach außen.

Die Siebvorrichtung umfasst vorzugsweise mehrere Siebelemente, die entlang einer Bewegungsrichtung aneinander angereiht sind und ein umlaufendes Endlossiebband bilden. Die Siebelemente können auch Filterelemente genannt werden. Im bestimmungsgemäßen Gebrauch der Siebvorrichtung strömt das Abwasser durch die Siebelemente hindurch, wobei dabei die Verunreinigungen und die Wassertiere zurückgehalten werden. Durch eine umlaufende Bewegung des Endlossiebbands entlang der Bewegungsrichtung werden die Verunreinigungen und die Wassertiere nach oben befördert.

Aufgrund des Endlossiebbands ist gewährleistet, dass das Abwasser stets durch eines der mehreren Siebelemente hindurchströmt.

Die Siebvorrichtung umfasst vorzugsweise eine obere Umlenkung und eine untere Umlenkung, mit deren Hilfe das Endlossiebband umgelenkt wird, so dass im bestimmungsgemäßen Gebrauch der Siebvorrichtung an einer ersten Seite der Siebvorrichtung die Siebelemente in eine Hochrichtung aufwärts und an einer zweiten Seite der Siebvorrichtung die Siebelemente entgegen der Hochrichtung abwärts bewegt werden. Wie vorstehend bereits beschrieben erfolgt die Bewegung entlang der Bewegungsrichtung.

Die Siebvorrichtung umfasst vorzugsweise wenigstens eine erste Auffangeinrichtung für die Verunreinigungen. Die Siebvorrichtung umfasst vorzugsweise wenigstens eine separate zweite Auffangeinrichtung für die Wassertiere. Die wenigstens eine erste Auffangeinrichtung und die wenigstens eine zweite Auffangeinrichtung sind dabei vorzugsweise im Bereich der oberen Umlenkung bzw. unterhalb der oberen Umlenkung angeordnet. So können die Verunreinigungen und/oder die Wassertiere in die wenigstens eine erste Auffangeinrichtung und/oder in die wenigstens eine zweite Auffangeinrichtung befördert, insbesondere abgeworfen und/oder gespült, werden. Die wenigstens eine erste Auffangeinrichtung kann auch als Schmutzauffangeinrichtung bezeichnet werden. Die wenigstens eine zweite Auffangeinrichtung kann als Wassertierauffangeinrichtung oder Fischauffangeinrichtung bezeichnet werden.

Die obere Umlenkung umfasst vorzugsweise ein Umlenkelement, mit dessen Hilfe das Endlossiebband im bestimmungsgemäßen Gebrauch der Siebvorrichtung an der ersten Seite der Siebvorrichtung aufgenommen und in Richtung der zweiten Seite der Siebvorrichtung umgelenkt wird. Das Umlenkelement ist vorzugsweise an einer Innenseite des Endlossiebbands angeordnet.

Die wenigstens eine erste Auffangeinrichtung ist vorzugsweise zumindest teilweise im Bereich des Umlenkelements und/oder entlang der Hochrichtung unterhalb des Umlenkelements angeordnet.

Vorzugsweise sind die wenigstens eine erste Auffangeinrichtung und die wenigstens eine zweite Auffangeinrichtung entlang einer Querrichtung nebeneinander angeordnet. Vorzugsweise sind die wenigstens eine erste Auffangeinrichtung und die wenigstens eine zweite Auffangeinrichtung zumindest teilweise im Bereich des Umlenkelements und/oder entlang der Hochrichtung unterhalb des Umlenkelements angeordnet.

Dadurch, dass die wenigstens eine erste Auffangeinrichtung und die wenigstens eine zweite Auffangeinrichtung entlang der Querrichtung nebeneinander angeordnet sind, können die Verunreinigungen und die Wassertiere einfach voneinander getrennt werden und die jeweilige Auffangeinrichtung entleert werden. Im Bereich der oberen Umlenkung, insbesondere am obersten Punkt der Siebvorrichtung, verläuft die Bewegungsrichtung zumindest teilweise entlang der Querrichtung. Werden die Verunreinigungen und die Wassertiere im Bereich der oberen Umlenkung nacheinander von dem Siebelement getrennt, so ist es möglich, diese entsprechend mit der jeweiligen Auffangeinrichtung aufzufangen.

Dadurch, dass die wenigstens eine erste Auffangeinrichtung im Bereich des Umlenkelements und die wenigstens eine zweite Auffangeinrichtung entlang der Querrichtung neben der ersten Auffangeinrichtung angeordnet sind, kann eine möglichst geringe Kammeröffnung realisiert werden. Als Kammeröffnung ist die Baugröße der Siebvorrichtung entlang der Querrichtung zu verstehen. Die Kammeröffnung ist also im Wesentlichen der Abstand der ersten Seite der Siebvorrichtung zur zweiten Seite bzw. der Abstand zweier an unterschiedlichen Seiten der Siebvorrichtung angeordneten Siebelemente. Somit ist es mit der erfindungsgemäßen Anordnung möglich, den Austrag und/oder das Sammeln der Verunreinigungen und der Wassertiere bei sehr geringer Kammeröffnung zu realisieren.

So ist für einen effektiven Schutz der Wassertiere eine weitere Umlenkung und somit eine vergrößerte Kammeröffnung nicht zwingend erforderlich. Auch können die erste Auffangeinrichtung und die zweite Auffangeinrichtung bei unterschiedlichen Kammeröffnungen gleich bzw. als Gleichteil ausgeführt werden. Dies reduziert die Herstellungskosten beim Herstellen mehrerer Siebvorrichtungen unterschiedlicher Baugrößen.

Vorteilhaft ist es, wenn die wenigstens eine erste Auffangeinrichtung und die wenigstens eine zweite Auffangeinrichtung zumindest teilweise miteinander verbunden sind. So kann es vorteilhaft sein, wenn eine erste Sammelrinne der ersten Auffangeinrichtung und eine zweite Sammelrinne der zweiten Auffangeinrichtung aneinander angrenzen und/oder miteinander verbunden und/oder als einteilige Sammeleinheit ausgebildet sind. Zusätzlich oder alternativ kann es vorteilhaft sein, wenn ein erstes Leitelement der ersten Auffangeinrichtung und ein zweites Leitelement der zweiten Auffangeinrichtung zusammen eine Leiteinheit ausbilden. So kann die Anzahl an Bauteilen der Siebvorrichtung reduziert und/oder der Zusammenbau der Siebvorrichtung vereinfacht werden.

Ebenso ist es vorteilhaft, wenn die obere Umlenkung wenigstens ein weiteres Umlenkelement aufweist, wobei das wenigstens eine weitere Umlenkelement dem Umlenkelement entlang der Bewegungsrichtung nachgeordnet ist, so dass das Endlossiebband im bestimmungsgemäßen Gebrauch der Siebvorrichtung von dem Umlenkelement übernommen und an der zweiten Seite abgegeben wird. Mit Hilfe des weiteren Umlenkelements kann die Kammeröffnung der Siebvorrichtung vergrößert werden.

Vorteile bringt es mit sich, wenn die erste Auffangeinrichtung wenigstens eine erste Öffnung und/oder wenigstens ein erstes Leitelement und/oder wenigstens eine erste Sammelrinne umfasst. Als erste Öffnung ist die Öffnung der wenigstens einen ersten Auffangeinrichtung zu verstehen. Mit Hilfe der wenigstens einen ersten Öffnung können die Verunreinigungen in die erste Sammelrinne eingebracht werden. Mit Hilfe der ersten Sammelrinne können die Verunreinigungen abgeführt, insbesondere aus der Siebvorrichtung heraustransportiert werden. Die wenigstens eine erste Öffnung ist vorzugsweise nach oben gerichtet, so dass die Verunreinigungen von oben entlang der Hochrichtung in die erste Sammelrinne fallen können. Mit Hilfe des wenigstens einen ersten Leitelements können die Verunreinigungen zur ersten Öffnung und/oder zur ersten Sammelrinne geführt und/oder geleitet werden.

Auch ist es von Vorteil, wenn die zweite Auffangeinrichtung wenigstens eine zweite Öffnung und/oder wenigstens ein zweites Leitelement und/oder wenigstens eine zweite Sammelrinne umfasst. Als zweite Öffnung ist die Öffnung der wenigstens einen zweiten Auffangeinrichtung zu verstehen. Mit Hilfe der wenigstens einen zweiten Öffnung können die Wassertiere in die zweite Sammelrinne eingebracht werden. Mit Hilfe der zweiten Sammelrinne können die Wassertiere abgeführt, insbesondere aus der Siebvorrichtung heraustransportiert werden. Die wenigstens eine zweite Öffnung ist vorzugsweise nach oben gerichtet, so dass die Wassertiere von oben entlang der Hochrichtung in die zweite Sammelrinne fallen können. Mit Hilfe des wenigstens einen zweiten Leitelements können die Wassertiere zur zweiten Öffnung und/oder zur zweiten Sammelrinne geführt und/oder geleitet werden. Mit Hilfe des wenigstens einen zweiten Leitelements und/oder der wenigstens einen zweiten Sammelrinne kann die Fallhöhe für die Wassertiere reduziert werden. So können Verletzungen minimiert werden.

Vorteilhaft ist es zudem, wenn die wenigstens eine erste Auffangeinrichtung, insbesondere die erste Öffnung und/oder das erste Leitelement und die wenigstens eine zweite Auffangeinrichtung, insbesondere die zweite Öffnung und/oder das zweite Leitelement, zumindest teilweise im Bereich des Umlenkelements und/oder entlang der Hochrichtung unterhalb des Umlenkelements angeordnet ist.

Vorteile bringt es zudem mit sich, wenn die wenigstens eine erste Auffangeinrichtung und die wenigstens eine zweite Auffangeinrichtung und/oder das wenigstens eine erste Leitelement und das wenigstens eine zweite Leitelement entlang der Querrichtung aneinander angrenzen. So ist eine möglichst kompakte Bauweise möglich. Zusätzlich oder alternativ kann dadurch vermieden werden, dass zwischen der ersten Auffangeinrichtung und der zweiten Auffangeinrichtung ein Spalt gebildet wird, durch welchen Wassertiere und/oder Verunreinigungen hindurchfallen können.

Des Weiteren ist es vorteilhaft, wenn das erste Leitelement und das zweite Leitelement zusammen eine Leiteinheit ausbilden, wobei die Leiteinheit vorzugsweise dachförmig ausgebildet ist. So bildet dabei das erste Leitelement und das zweite Leitelement jeweils eine Dachfläche aus. Das erste Leitelement und das zweite Leitelement sind dabei vorzugsweise an einem First der dachförmigen Leiteinheit aneinander angeordnet. Zusätzlich oder alternativ kann dadurch die Fallhöhe für die Wassertiere weiter reduziert werden. Die Leiteinheit ist dabei vorzugsweise entlang der Hochrichtung oberhalb der ersten Auffangrinne, der zweiten Auffangrinne, der ersten Öffnung und/oder der zweiten Öffnung angeordnet. Durch vorstehende Weiterbildung durch die Leiteinheit kann zudem das Trennen der Verunreinigungen und der Wassertiere verbessert werden. Insbesondere kann durch die Leiteinheit gewährleistet werden, dass die Wassertiere und/oder die Verunreinigungen entweder mit Hilfe des ersten Leitelements zur ersten Sammelrinne oder mit Hilfe des zweiten Leitelements zur zweiten Sammelrinne geleitet werden.

Auch ist es vorteilhaft, wenn das erste Leitelement, das zweite Leitelement und/oder die Leiteinheit entlang der Hochrichtung oberhalb der ersten Öffnung und der zweiten Öffnung angeordnet ist. So kann, insbesondere bei den Wassertieren, die Fallhöhe reduziert werden. Zusätzlich oder alternativ kann die erste Sammelrinne und/oder die zweite Sammelrinne entlang der Hochrichtung mit einem größeren Abstand zum Endlossiebband ausgeführt werden. So kann der Gestaltungsspielraum bei gleichzeitig hohem Schutz der Wassertiere gewährleistet werden.

Auch ist es von Vorteil, wenn das Umlenkelement als wenigstens ein Umlenkrad und/oder das wenigstens eine weitere Umlenkelement als Umlenkprofil, insbesondere als Umlenkkufe, ausgebildet ist. Das als Umlenkrad ausgebildete Umlenkelement ist vorzugsweise als Kettenrad ausgebildet und/oder umfasst wenigstens ein Kettenrad. Das Umlenkelement kann dabei vorzugsweise wenigstens ein Kettenrad und/oder zwei Kettenräder umfassen. Mit Hilfe des wenigstens einen Kettenrads kann das Umlenkelement mit dem Endlossiebband in Eingriff stehen und/oder sich mitdrehen. Zusätzlich oder alternativ ist es möglich, dass mit Hilfe des Kettenrads das Endlossiebband angetrieben wird.

Das als Umlenkprofil ausgebildete weitere Umlenkelement steht beim Umlenken still bzw. das Endlossiebband wird mittels Gleitreibung durch das weitere Umlenkelement umgelenkt. Dadurch, dass das weitere Umlenkelement dem Umlenkelement entlang der Bewegungsrichtung nachgeordnet ist, ist ein geringerer Verschleiß des als Umlenkkufe oder Umlenklaufbahn oder Umlenkprofil ausgebildeten weiteren Umlenkelements gewährleistet, da hier weniger Last vom Endlossiebband auf das weitere Umlenkelement einwirkt. So kann die Reibung, insbesondere die Gleitreibung, die vom Endlossiebband auf das weitere Umlenkelement als stillstehendes Umlenkelement einwirkt, reduziert werden. Vorzugsweise ist das weitere Umlenkelement bogenförmig und/oder teilkreisförmig ausgebildet. Hierdurch kann die Gleitreibung weiter reduziert werden.

Des Weiteren ist es vorteilhaft, wenn das Umlenkelement und das weitere Umlenkelement voneinander beabstandet sind und/oder zwischen dem Umlenkelement und dem weiteren Umlenkelement ein Zwischenraum angeordnet ist. Als Zwischenraum ist der Bereich der Siebvorrichtung zu verstehen, der zwischen dem Umlenkelement und dem weiteren Umlenkelement angeordnet ist. An einem Ende des Zwischenraums führt das Endlossiebband tangential zum Umlenkelement. An einem anderen Ende des Zwischenraums führt das Endlossiebband tangential zum weiteren Umlenkelement.

Zudem ist es vorteilhaft, wenn die wenigstens eine erste Auffangeinrichtung und/oder die wenigstens eine zweite Auffangeinrichtung zumindest teilweise im Bereich des Zwischenraums und/oder unterhalb des Endlossiebbands im Bereich des Zwischenraums angeordnet ist. Dadurch kann mit Hilfe der Reinigungseinrichtung das Endlossiebband vor dem Erreichen des weiteren Umlenkelements gereinigt und/oder die Verunreinigungen und/oder die Wassertiere mit Hilfe der wenigstens einen ersten Auffangeinrichtung und/oder der wenigstens einen zweiten Auffangeinrichtung aufgefangen werden. Dadurch wird verhindert, dass die Verunreinigungen und/oder die Wassertiere durch das Endlossiebband entgegen der Hochrichtung zurück in das Abwasser transportiert werden.

Vorteile bringt es mit sich, wenn die Siebvorrichtung wenigstens eine Reinigungseinheit zum Reinigen der Siebelemente umfasst, wobei die wenigstens eine Reinigungseinheit vorzugsweise der oberen Umlenkung, insbesondere dem Umlenkelement und/oder dem Zwischenraum, zugeordnet ist. Mit Hilfe der Reinigungseinheit können die Siebelemente von den Verunreinigungen aus dem Abwasser gereinigt werden. Zusätzlich oder alternativ kann die Reinigungseinheit, insbesondere schonend, auf die Wassertiere einwirken, so dass diese von den Siebelementen abgespült werden.

Vorteile bringt es zudem mit sich, wenn die Siebelemente und/oder das Endlossiebband wenigstens eine Auffangvertiefung für die Wassertiere umfasst. In den Auffangvertiefungen können die Wassertiere aufgefangen werden. So ist es möglich, die Wassertiere mit Hilfe der Auffangvertiefungen schonend mit dem Siebelement mitzubewegen und zur zweiten Auffangeinrichtung zu transportieren.

Ebenso ist es vorteilhaft, wenn die Reinigungseinheit wenigstens eine Hochdruckdüse zum Reinigen der Siebelemente von den Verunreinigungen und/oder wenigstens eine Niederdruckdüse zum Abspülen und/oder Ausspülen der Wassertiere von den Siebelementen und/oder aus der wenigstens einen Auffangvertiefung umfasst. Wie aus den Bezeichnungen hervorgeht, ist die Hochdruckdüse ausgebildet, ein Fluid, insbesondere eine Flüssigkeit, vorzugsweise Wasser, mit einem hohen Druck auszugeben. Die Niederdruckdüse ist ausgebildet, ein Fluid, insbesondere eine Flüssigkeit, vorzugsweise Wasser, mit einem niedrigen Druck auszugeben. Die Hochdruckdüse wirkt dabei derart auf die Siebelemente ein, dass die Verunreinigungen entfernt werden können. Beim Einwirken der Hochdruckdüse sind die Wassertiere vorzugsweise durch die Auffangvertiefung geschützt und/oder bereits durch die zweite Auffangeinrichtung aufgefangen. Mit Hilfe der Niederdruckdüse können die Wassertiere schonend vom Siebelement, insbesondere aus der Auffangvertiefung zur zweiten Auffangeinrichtung transportiert werden.

Auch ist es von Vorteil, wenn wenigstens eines der Siebelemente wenigstens ein Gelenk, insbesondere ein Drehgelenk, umfasst, mit dessen Hilfe die wenigstens eine Auffangvertiefung zum Entleeren der Wassertiere zumindest teilweise gedreht und/oder zumindest teilweise geöffnet werden kann. Das kann den Transport der Wassertiere zur zweiten Auffangeinrichtung erleichtern und/oder die Niederdruckdüse ersetzten.

Ebenso bringt es Vorteile mit sich, wenn die wenigstens eine Auffangvertiefung derart ausgebildet ist, dass die Wassertiere vor der wenigstens einen Reinigungseinheit, insbesondere der wenigstens einen Hochdruckdüse, geschützt sind.

Vorteilhaft ist es zudem, wenn das Umlenkelement an einem ersten Umlenkbereich und das weitere Umlenkelement an einem zweiten Umlenkbereich mit dem Endlossiebband in Wirkverbindung steht, wobei der zweite Umlenkbereich vorzugsweise dem ersten Umlenkbereich entlang der Bewegungsrichtung des Endlossiebbands nachfolgt.

Vorteile bringt es zudem mit sich, wenn die wenigstens eine Hochdruckdüse und/oder die wenigstens eine Niederdruckdüse derart angeordnet ist, dass diese im bestimmungsgemäßen Gebrauch der Siebvorrichtung auf eines der Siebelemente und/oder auf die wenigstens eine Auffangvertiefung im Bereich des Umlenkelements und/oder dem ersten Umlenkbereich einwirkt.

Weitere Vorteile der Erfindung sind in den nachfolgenden Ausführungsbeispielen beschrieben. Es zeigt:
- **Figur 1**: eine schematische Seitenansicht einer Siebvorrichtung gemäß einem Ausführungsbeispiel,
- **Figur 2**: einen Ausschnitt einer schematischen Seitenansicht einer Siebvorrichtung gemäß einem alternativen Ausführungsbeispiel, und
- **Figur 3**: einen Ausschnitt einer schematischen Seitenansicht einer Siebvorrichtung gemäß einem weiteren Ausführungsbeispiel.

Bei der nachfolgenden Beschreibung der Figuren werden für in den verschiedenen Figuren jeweils identische und/oder zumindest vergleichbare Merkmale gleiche Bezugszeichen verwendet. Die einzelnen Merkmale, deren Ausgestaltung und/oder Wirkweise werden meist nur bei ihrer ersten Erwähnung ausführlich erläutert. Werden einzelne Merkmale nicht nochmals detailliert erläutert, so entspricht deren Ausgestaltung und/oder Wirkweise der Ausgestaltung und Wirkweise der bereits beschriebenen gleichwirkenden oder gleichnamigen Merkmale.

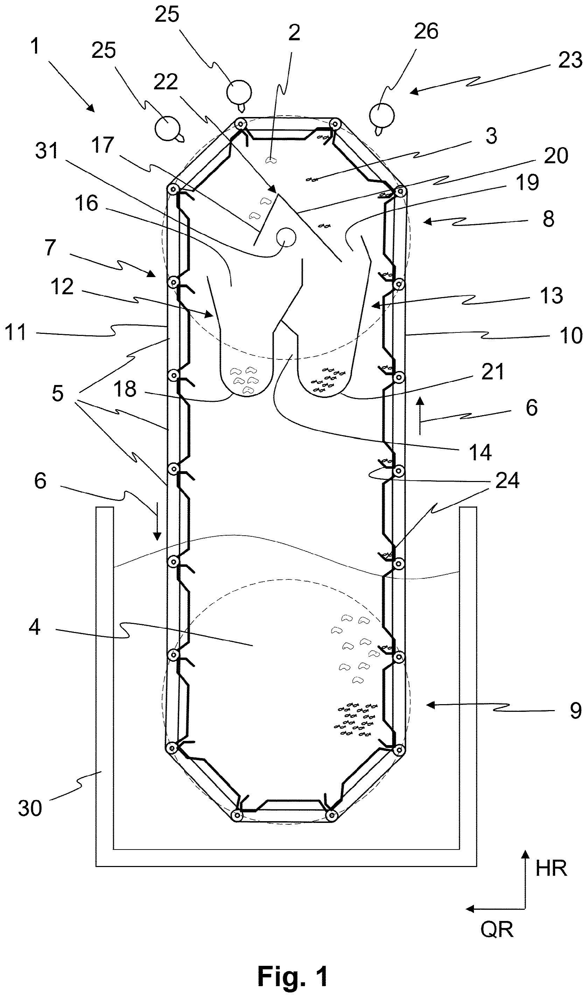

Figur 1 zeigt eine schematische Seitenansicht einer Siebvorrichtung 1 gemäß einem Ausführungsbeispiel. Die Siebvorrichtung 1 ist ausgebildet zum Abscheiden von Verunreinigungen 2 und Wassertieren 3 aus einem strömenden Abwasser 4. Beispielhaft ist die Siebvorrichtung 1 im gezeigten Ausführungsbeispiel als Siebbandmaschine ausgebildet. Für eine übersichtlichere Darstellung ist die Siebvorrichtung 1 schematisch gezeigt. Merkmale und/oder Elemente, die mehrmals in der Siebvorrichtung 1 vorhanden sind, wurden lediglich teilweise mit Bezugszeichen versehen. Merkmale und/oder Elemente, die in der Figur keine Bezugszeichen umfassen, entsprechen vorzugsweise den Merkmalen und/oder Elementen mit Bezugszeichen, die eine ähnliche Ausgestaltung aufweisen.

Die Siebvorrichtung 1 umfasst mehrere Siebelemente 5, die entlang einer Bewegungsrichtung 6 aneinander angereiht sind. Die aneinandergereihten Siebelemente 5 bilden ein umlaufendes Endlossiebband 7. Eine obere Umlenkung 8 und eine untere Umlenkung 9 der Siebvorrichtung 1 lenken im bestimmungsgemäßen Gebrauch der Siebvorrichtung 1 das Endlossiebband 7 um, sodass an einer ersten Seite 10 der Siebvorrichtung 1 die Siebelemente 5 in eine Hochrichtung HR aufwärts und an einer zweiten Seite 11 der Siebvorrichtung 1 die Siebelemente 5 entgegen der Hochrichtung HR abwärts bewegt werden. So taucht im bestimmungsgemäßen Gebrauch der Siebvorrichtung 1 das Endlossiebband 7 im Bereich der unteren Umlenkung 9 in das Abwasser 4 ein und wird vorzugsweise von innen nach außen vom Abwasser 4 durchströmt. Dadurch ist es möglich, dass die Verunreinigungen 2 und/oder die Wassertiere 3 mit Hilfe der Siebelemente 5 zurückgehalten und/oder abgeschieden werden.

Im gezeigten Ausführungsbeispiel ist die Siebvorrichtung 1 mit der unteren Umlenkung 9 in einem Abwasserkanal 30 angeordnet. Der Abwasserkanal 30 kann das Abwasser 4 entlang der Normalrichtung des Blatts transportieren. Es ist jedoch ebenso vorstellbar, dass die Siebvorrichtung 1 um eine vertikale Achse gedreht im Abwasserkanal 30 angeordnet ist. Zusätzlich oder alternativ ist es vorstellbar, dass die Siebvorrichtung 1 in einem schrägen Abwasserkanal 30 angeordnet ist. Zusätzlich oder alternativ kann die Siebvorrichtung 1 zur vertikalen Achse geneigt sein. Im gezeigten Ausführungsbeispiel ist innerhalb des Endlossiebbands 7 der Siebvorrichtung 1 das ungereinigte Abwasser 4 angeordnet. Die Siebelemente 5 des Endlossiebbands 7 werden von innen nach außen durchströmt. Außerhalb des Endlossiebbands 7 der Siebvorrichtung 1 ist das gereinigte und/oder gesiebte Abwasser 4 angeordnet. Die Verunreinigungen 2 und/oder die Wassertiere 3 gelangen nicht zur Außenseite, sondern werden von den Siebelementen 5 zurückgehalten. Um einen stetigen Durchfluss durch die Siebelemente 5 zu gewährleisten, bewegen sich diese im bestimmungsgemäßen Gebrauch der Siebvorrichtung 1 entlang der Bewegungsrichtung 6. So werden abwechselnd alle Siebelemente 5 vom strömenden Abwasser 4 durchströmt.

Die obere Umlenkung 8 umfasst ein Umlenkelement 14, mit dessen Hilfe das Endlossiebband 7 im bestimmungsgemäßen Gebrauch der Siebvorrichtung 1 an der ersten Seite 10 der Siebvorrichtung 1 aufgenommen und in Richtung der zweiten Seite 11 der Siebvorrichtung 1 umgelenkt wird. Zum Antreiben des Endlossiebbands 7 entlang der Bewegungsrichtung 6 umfasst die Siebvorrichtung 1 im gezeigten Ausführungsbeispiel eine Antriebsvorrichtung 31. Die Antriebsvorrichtung 31 greift im gezeigten Ausführungsbeispiel an der oberen Umlenkung 8, insbesondere am Umlenkelement 14, an. Das Umlenkelement 14 der oberen Umlenkung 8 ist dabei vorzugsweise als Kettenrad ausgebildet, welches das Endlossiebband 7 antreiben kann. Beispielsweise umfasst die Antriebsvorrichtung 31 einen Antriebsmotor.

Mit zunehmender Durchströmung der Siebelemente 5, lagern sich die Verunreinigungen 2 und/oder die Wassertiere 3 an den Siebelementen 5, die durch das Abwasser 4 durchströmt werden, ab. Mit steigender Ablagerung wird der Durchfluss durch das jeweilige Siebelement 5 reduziert und/oder der Druck im Inneren des Endlossiebbandes 7 nimmt zu und/oder der Wasserstand innerhalb des Abwasserkanals 30 steigt. Beispielsweise kann die Siebvorrichtung 1 dies detektieren und bewegt das Endlossiebband 7 entlang der Bewegungsrichtung 6 weiter. So wird nun ein anderes der mehreren Siebelemente 5 durchströmt.

Um die Siebelemente 5 und/oder das Endlossiebband 7 zu reinigen, umfasst die Siebvorrichtung 1 wenigstens eine Reinigungseinheit 23. Die wenigstens eine Reinigungseinheit 23 ist im gezeigten Ausführungsbeispiel der oberen Umlenkung 8 zugeordnet. Zusätzlich oder alternativ ist es vorstellbar, dass die Reinigungseinheit 23 der ersten Seite 10 und/oder der zweiten Seite 11 der Siebvorrichtung 1 zugeordnet ist.

Die wenigstens eine Reinigungseinheit 23 umfasst im gezeigten Ausführungsbeispiel eine Hochdruckdüse 25 für die Verunreinigungen 2 und wenigstens eine Niederdruckdüse 26 für die Wassertiere 3. Hierbei ist es ebenso vorstellbar, dass die Reinigungseinheit 23 lediglich die Hochdruckdüse 25 oder die Niederdruckdüse 26 und/oder andere Mittel zur Reinigung umfasst. Beispielsweise kann die wenigstens eine Hochdruckdüse 25 und/oder die wenigstens eine Niederdruckdüse 26, wie im gezeigten Ausführungsbeispiel dargestellt, von außen auf die Siebelemente 5 einwirken. Ebenfalls ist es vorstellbar, dass die Reinigungseinheit 23 mehrere Hochdruckdüsen 25 und/oder mehrere Niederdruckdüsen 26 umfasst. Im bestimmungsgemäßen Gebrauch der Reinigungseinheit 23 kann mit Hilfe der Hochdruckdüse 25 Flüssigkeit mit Hochdruck und/oder mit Hilfe der Niederdruckdüse 26 Flüssigkeit mit Niederdruck auf die Siebelemente 5 einwirken.

Die Siebvorrichtung 1 umfasst wenigstens eine erste Auffangeinrichtung 12 für die Verunreinigungen 2 und wenigstens eine separate zweite Auffangeinrichtung 13 für die Wassertiere 3. Im gezeigten Ausführungsbeispiel ist die wenigstens eine erste Auffangeinrichtung 12 zumindest teilweise im Bereich des Umlenkelements 14 angeordnet. Ebenfalls ist es vorstellbar, dass die wenigstens eine erste Auffangeinrichtung 12 entlang der Hochrichtung HR unterhalb des Umlenkelements 14 angeordnet ist. Die zweite Auffangeinrichtung 13 und die erste Auffangeinrichtung 12 sind entlang der einen Querrichtung QR der Siebvorrichtung 1 nebeneinander angeordnet. Die wenigstens eine erste Auffangeinrichtung 12 und die wenigstens eine zweite Auffangeinrichtung 13 können dabei unabhängig voneinander ausgebildet und/oder trennbar miteinander verbunden sein.

Im gezeigten Ausführungsbeispiel ist die zweite Auffangeinrichtung 13 näher an der ersten Seite 10 bzw. angrenzend an die erste Seite 10 der Siebvorrichtung 1 angeordnet. Die erste Auffangeinrichtung 12 ist näher an der zweiten Seite 11 bzw. angrenzend an die zweite Seite 11 der Siebvorrichtung 1 angeordnet. Dadurch ist es möglich, dass zunächst die Wassertiere 3 von den Siebelementen 5 in die zweite Auffangeinrichtung 13 transportiert werden. Erst im Anschluss daran werden die Verunreinigungen 2 von den Siebelementen 5 in die erste Auffangeinrichtung 12 transportiert. Die wenigstens eine Niederdruckdüse 26 ist dabei derart angeordnet, dass diese das Abscheiden der Wassertiere 3 in die zweite Auffangeinrichtung 13 unterstützt. Die wenigstens eine Hochdruckdüse 25, im gezeigten Ausführungsbeispiel die zwei Hochdruckdüsen 25, sind derart angeordnet, dass diese das Abscheiden der Verunreinigungen 2 in die erste Auffangeinrichtung 12 unterstützt bzw. unterstützen. So folgen die wenigstens eine Hochdruckdüse 25 bzw. die zwei Hochdruckdüsen 25 entlang der Bewegungsrichtung 6 der Niederdruckdüse 26 nach.

Zum Schutz der Wassertiere 3 umfasst jedes der Siebelemente 5 eine Auffangvertiefung 24. In der jeweiligen Auffangvertiefung 24 können die Wassertiere 3 gesammelt werden. Die Auffangvertiefung 24 kann dabei derart ausgebildet sein, dass die Wassertiere 3 schonend und/oder geschützt vor der Reinigungseinheit 23 vom Abwasser 4 in die zweite Auffangeinrichtung 13 transportiert werden. Im gezeigten Ausführungsbeispiel ist die Auffangvertiefung 24 als eine Auffangschaufel an den Siebelementen 5 ausgebildet. Beim Umlenken des Endlossiebbands 7 im Bereich der oberen Umlenkung 8 können die Wassertiere 3 durch Schwerkraft und/oder unterstützt durch die Niederdruckdüse 26 in die zweite Auffangeinrichtung 13 fallen.

Die erste Auffangeinrichtung 12 umfasst im gezeigten Ausführungsbeispiel wenigstens eine erste Öffnung 16, wenigstens ein erstes Leitelement 17 und wenigstens eine erste Sammelrinne 18. Mit Hilfe des ersten Leitelements 17 können die Verunreinigungen 2 zu der wenigstens einen ersten Öffnung 16 transportiert werden. Die wenigstens eine erste Sammelrinne 18 transportiert die Verunreinigungen 2 ab. Die zweite Auffangeinrichtung 13 umfasst im gezeigten Ausführungsbeispiel wenigstens eine zweite Öffnung 19, wenigstens ein zweites Leitelement 20 und wenigstens eine zweite Sammelrinne 21. Mit Hilfe des zweiten Leitelements 20 können die Wassertiere 3 zu der wenigstens einen zweiten Öffnung 19 transportiert werden. Die wenigstens eine zweite Sammelrinne 21 transportiert die Wassertiere 3 anschließend ab.

Das wenigstens eine erste Leitelement 17 und das wenigstens eine zweite Leitelement 20 bilden gemeinsam eine Leiteinheit 22 aus. Mit Hilfe der Leiteinheit 22 können die Wassertiere 3 zur ersten Seite 10 der Siebvorrichtung 1 und die Verunreinigungen 2 zur zweiten Seite 11 der Siebvorrichtung 1 umgeleitet werden. Die Leiteinheit 22 ist im gezeigten Ausführungsbeispiel dachförmig ausgebildet. Mit Hilfe der Leiteinheit 22 bzw. des zweiten Leitelements 20 kann die Fallhöhe der Wassertiere 3 reduziert werden, sodass diese schonend abtransportiert werden können.

Wie zu erkennen, sind die erste Auffangeinrichtung 12 und die zweite Auffangeinrichtung 13 im gezeigten Ausführungsbeispiel im Bereich des Umlenkelements 14 angeordnet. Die erste Sammelrinne 18 und die zweite Sammelrinne 21 sind hingegen entlang der Hochrichtung HR unterhalb des Umlenkelements 14 angeordnet. Das erste Leitelement 17, das zweite Leitelement 20 und/oder die Leiteinheit 22 sind entlang der Hochrichtung HR oberhalb der ersten Öffnung 16 und der zweiten Öffnung 19 angeordnet. Zusätzlich oder alternativ ist es vorstellbar, dass die erste Auffangeinrichtung 12 und/oder die zweite Auffangeinrichtung 13 zumindest teilweise und/oder vollständig im Bereich und/oder unterhalb des Umlenkelements 14 angeordnet sind.

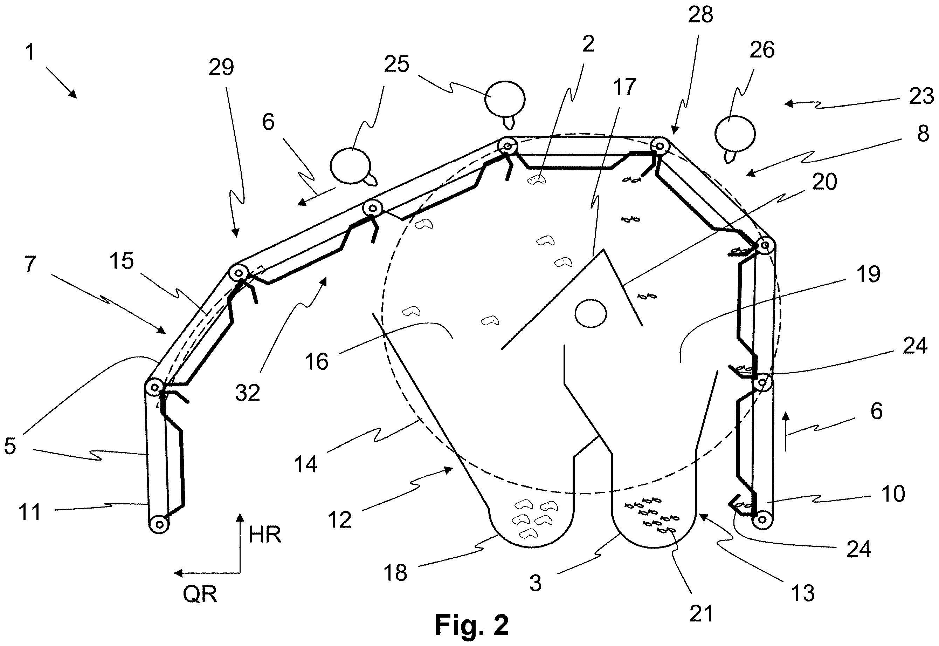

Figur 2 zeigt einen Ausschnitt einer schematische Seitenansicht einer Siebvorrichtung 1 gemäß einem alternativen Ausführungsbeispiel. Auch hier ist die Siebvorrichtung 1 zum Abscheiden von Verunreinigungen 2 und Wassertiere 3 aus einem strömenden Abwasser 4 ähnlich der Figur 1 ausgebildet. Für eine übersichtlichere Darstellung ist auch hier die Siebvorrichtung 1, ähnlich der Figur 1, schematisch gezeigt. Merkmale und/oder Elemente, die mehrmals in der Siebvorrichtung 1 vorhanden sind, wurden lediglich teilweise mit Bezugszeichen versehen. Zudem ist im Ausführungsbeispiel der Figur 2 lediglich der Bereich der oberen Umlenkung 8 dargestellt. Die untere Umlenkung 9, das Abwasser 4 und/oder der Abwasserkanal 30 kann entsprechend des Ausführungsbeispiels der Figur 1 ausgebildet sein.

Im Unterschied zum Ausführungsbeispiel der Figur 1 umfasst die Siebvorrichtung 1 des Ausführungsbeispiels der Figur 2 ein weiteres Umlenkelement 15. Das weitere Umlenkelement 15 ist im gezeigten Ausführungsbeispiel dem Umlenkelement 14 entlang der Bewegungsrichtung 6 nachgeordnet. So wird das Endlossiebband 7 im bestimmungsgemäßen Gebrauch der Siebvorrichtung 1 mit Hilfe des weiteren Umlenkelements 15 von dem Umlenkelement 14 übernommen und an der zweiten Seite 11 abgegeben. Somit umfasst die Siebvorrichtung 1 einen ersten Umlenkbereich 28, der durch das Umlenkelement 14 gebildet ist, und einem zweiten Umlenkbereich 29, der durch das weitere Umlenkelement 15 gebildet ist. Das weitere Umlenkelement 15 ist im gezeigten Ausführungsbeispiel als Umlenkprofil, insbesondere als Umlenkkufe, ausgebildet. Vorzugsweise ist das weitere Umlenkelement 15 bogenförmig und/oder teilkreisförmig ausgebildet.

Das Umlenkelement 14 und das weitere Umlenkelement 15 sind voneinander beabstandet, so dass zwischen dem Umlenkelement 14 und dem weiteren Umlenkelement 15 ein Zwischenraum 32 angeordnet ist. Im Zwischenraum 32 verläuft das Endlossiebband 7 im Wesentlichen gerade. An beiden Enden des Zwischenraums 32 geht das Endlossiebband 7 vorzugsweise tangential in das Umlenkelement 14 und das weitere Umlenkelement 15 über. Wenigstens eine Auffangeinrichtung 12, 13 kann dabei dem Zwischenraum 32 zugeordnet sein bzw. im Bereich des Zwischenraums 32 angeordnet sein. Im vorliegenden Ausführungsbeispiel ist die wenigstens eine erste Auffangeinrichtung 12 im Bereich des Zwischenraums 32, insbesondere unterhalb des sich im Zwischenraum 32 befindlichen Endlossiebbands 7, angeordnet. So können auch Verunreinigungen 2 im Bereich des Zwischenraums 32 von der wenigstens einen ersten Auffangeinrichtung 12 aufgefangen werden.

Die Reinigungseinheit 23, insbesondere die wenigstens eine Hochdruckdüse 25 und/oder die wenigstens eine Niederdruckdüse 26, sind im gezeigten Ausführungsbeispiel dem ersten Umlenkbereich 28 und/oder dem Zwischenraum 32 zugeordnet. Im Detail ist die wenigstens eine Niederdruckdüse 26 im gezeigten Ausführungsbeispiel dem ersten Umlenkbereich 28 zugeordnet bzw. im Bereich des Umlenkelements 14 angeordnet. Auch ist eine der Hochdruckdüsen 25 dem ersten Umlenkbereich 28 zugeordnet bzw. im Bereich des Umlenkelements 14 angeordnet. Zusätzlich ist im gezeigten Ausführungsbeispiel eine der gezeigten Hochdruckdüsen 25 dem Zwischenraum 32 zugeordnet, so dass die Verunreinigungen 2 am Endlossiebband 7 auch im Bereich des Zwischenraums 32 abgereinigt werden können. Wie bereits beschrieben kann dadurch gewährleistet werden, dass entlang der Bewegungsrichtung 6, spätestens im Bereich des Zwischenraums 32, die Verunreinigungen 2 von den Siebelementen 5 entfernt wurden. So können die Siebelemente 5 in einem möglichst sauberen Zustand durch das weitere Umlenkelement 15 umgelenkt und zum Abwasser 4 (siehe Figur 1) bewegt werden. Dadurch ist es möglich, sowohl die erste Auffangeinrichtung 12, als auch die zweite Auffangeinrichtung 13 im Bereich des Umlenkelements 14 und des Zwischenraums 32 zu positionieren. So kann gewährleistet werden, dass die Verunreinigungen 2 zumindest größtenteils von dem Endlossieb 7 abgereinigt wurden, bevor das Endlossiebband 7 das weitere Umlenkelement 15 erreicht. Das Umlenkelement 14 ist als drehende Umlenkung ausgebildet. Das weitere Umlenkelement 15 ist als stillstehende und/oder raumfeste Umlenkung ausgebildet.

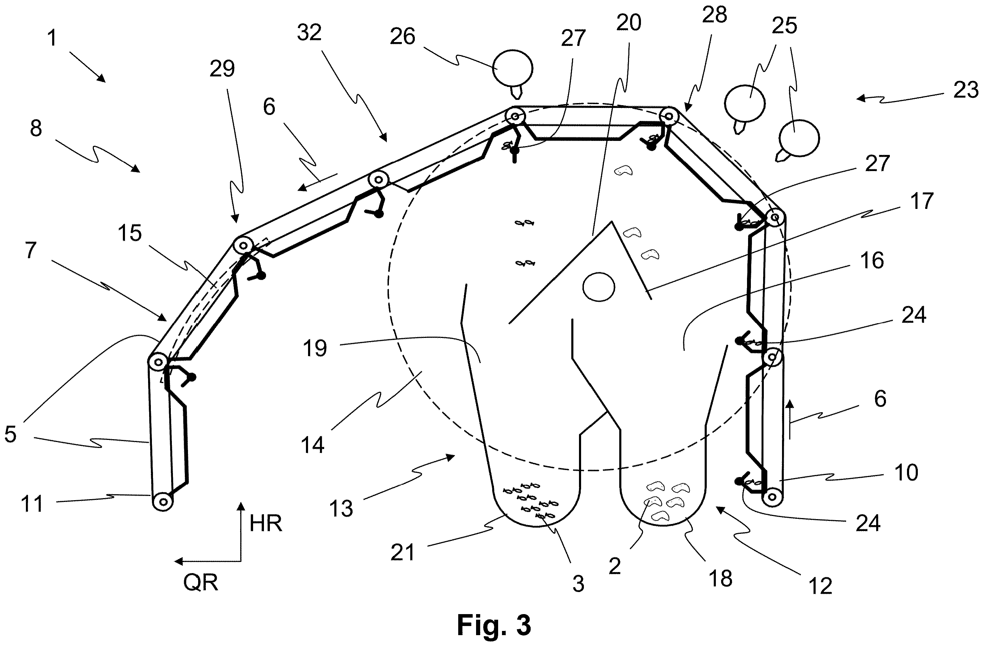

Figur 3 zeigt einen Ausschnitt einer schematische Seitenansicht einer Siebvorrichtung 1 gemäß einem weiteren Ausführungsbeispiel. Auch hier ist die Siebvorrichtung 1, ähnlich den vorherigen Ausführungsbeispielen, lediglich schematisch gezeigt. Ähnlich zur Siebvorrichtung 1 des Ausführungsbeispiels der Figur 2 kann auch bei der Siebvorrichtung 1 des Ausführungsbeispiels der Figur 3 die untere Umlenkung 9, das Abwasser 4 und/oder der Abwasserkanal 30 entsprechend des Ausführungsbeispiels der Figur 1 ausgebildet sein.

Das Ausführungsbeispiel der Figur 3 unterscheidet sich unter anderem in der Anordnung der wenigstens einen ersten Auffangeinrichtung 12 und der wenigstens einen zweiten Auffangeinrichtung 13 zu den Siebvorrichtungen 1 der Ausführungsbeispiele der Figuren 1 und 2. So ist im Ausführungsbeispiel der Figur 3 die wenigstens eine erste Auffangeinrichtung 12 näher an der ersten Seite 10 der Siebvorrichtung 1 angeordnet bzw. der ersten Seite 10 zugeordnet. Die wenigstens eine zweite Auffangeinrichtung 13 ist entsprechend näher an der zweiten Seite 11 der Siebvorrichtung 1 angeordnet bzw. der zweiten Seite 11 zugeordnet. So werden vorzugsweise zunächst die Verunreinigungen 2 von den Siebelementen 5 abgereinigt bzw. in die erste Auffangeinrichtung 12 transportiert. Hierfür wirkt entlang der Bewegungsrichtung 6 zunächst die wenigstens eine Hochdruckdüse 25 auf das Siebelement 5 ein. Im Anschluss daran können, insbesondere mit Hilfe der Niederdruckdüse 26, die Wassertiere 3 in die wenigstens eine zweite Auffangeinrichtung 13 transportiert werden.

Zudem umfasst wenigstens eines der Siebelemente 5 im gezeigten Ausführungsbeispiel wenigstens ein Gelenk 27, insbesondere ein Drehgelenk, mit dessen Hilfe die Auffangvertiefung 24 zum Entleeren der Wassertiere 3 zumindest teilweise gedreht und/oder zumindest teilweise geöffnet werden kann. Im gezeigten Ausführungsbeispiel wird ein Teil der Auffangvertiefung 24 gedreht und so die Auffangvertiefung 24 teilweise geöffnet. Dadurch ist es möglich, dass die Wassertiere 3 im gezeigten Ausführungsbeispiel beim Umlenken des Endlossiebbands 7 durch das Umlenkelement 14 zunächst in der Auffangvertiefung 24 verbleiben. So kann mit Hilfe des Gelenks 27 der erste Umlenkbereich 28 zumindest teilweise überwunden werden, bevor die Wassertiere 3 entlang der Hochrichtung HR aus der Auffangvertiefung 24 herausfallen. Mit Hilfe des Gelenks 27 können die Wassertiere 3 somit aktiv bzw. gesteuert aus der Auffangvertiefung 24 herausgeführt bzw. herausgeleitet werden. Die Auffangvertiefung 24 und/oder das Gelenk 27 kann die Wassertiere 3 zusätzlich oder alternativ vor der Einwirkung der Hochdruckdüse(n) 25 schützen.

Es sei angemerkt, dass auch die Siebelemente 5 der Ausführungsbeispiele der Figuren 1 und 2 entsprechende Gelenke 27 umfassen können. Auch ist es möglich, dass die Siebvorrichtungen 1 der Figuren 2 und 3 die obere Umlenkung 8 mit lediglich dem Umlenkelement 14 und ohne das weitere Umlenkelement 15 umfassen.

### Bezugszeichenliste

- 1: Siebvorrichtung
- 2: Verunreinigung
- 3: Wassertier
- 4: Abwasser
- 5: Siebelement
- 6: Bewegungsrichtung
- 7: Endlossiebband
- 8: obere Umlenkung
- 9: untere Umlenkung
- 10: erste Seite
- 11: zweite Seite
- 12: erste Auffangeinrichtung
- 13: zweite Auffangeinrichtung
- 14: Umlenkelement
- 15: weiteres Umlenkelement
- 16: erste Öffnung
- 17: erstes Leitelement
- 18: erste Sammelrinne
- 19: zweite Öffnung
- 20: zweites Leitelement
- 21: zweite Sammelrinne
- 22: Leiteinheit
- 23: Reinigungseinheit
- 24: Auffangvertiefung
- 25: Hochdruckdüse
- 26: Niederdruckdüse
- 27: Gelenk
- 28: erster Umlenkbereich
- 29: zweiter Umlenkbereich
- 30: Abwasserkanal
- 31: Antriebsvorrichtung
- 32: Zwischenraum

- HR: Hochrichtung
- QR: Querrichtung

## Patentansprüche

1. Siebvorrichtung (1) zum Abscheiden von Verunreinigungen (2) und Wassertieren (3) aus einem strömenden Abwasser (4),
mit mehreren Siebelementen (5), die entlang einer Bewegungsrichtung (6) aneinander angereiht sind und ein umlaufendes Endlossiebband (7) bilden,
mit einer oberen Umlenkung (8) und einer unteren Umlenkung (9), mit deren Hilfe das Endlossiebband (7) umgelenkt wird, so dass im bestimmungsgemäßen Gebrauch der Siebvorrichtung (1) an einer ersten Seite (10) der Siebvorrichtung (1) die Siebelemente (5) in eine Hochrichtung (HR) aufwärts und an einer zweiten Seite (11) der Siebvorrichtung (1) die Siebelemente (5) entgegen der Hochrichtung (HR) abwärts bewegt werden,
mit wenigstens einer ersten Auffangeinrichtung (12) für die Verunreinigungen (2), und
mit wenigstens einer separaten zweiten Auffangeinrichtung (13) für die Wassertiere (3),
wobei die obere Umlenkung (8) ein Umlenkelement (14) umfasst, mit dessen Hilfe das Endlossiebband (7) im bestimmungsgemäßen Gebrauch der Siebvorrichtung (1) an der ersten Seite (10) der Siebvorrichtung (1) aufgenommen und in Richtung der zweiten Seite (11) der Siebvorrichtung (1) umgelenkt wird, und
wobei die wenigstens eine erste Auffangeinrichtung (12) zumindest teilweise im Bereich des Umlenkelements (14) und/oder entlang der Hochrichtung (HR) unterhalb des Umlenkelements (14) angeordnet ist,
**dadurch gekennzeichnet,**
**dass** die wenigstens eine erste Auffangeinrichtung (12) und die wenigstens eine zweite Auffangeinrichtung (13) entlang einer Querrichtung (QR) nebeneinander angeordnet sind.

2. Siebvorrichtung nach dem vorangegangenen Anspruch, **dadurch gekennzeichnet, dass** die obere Umlenkung (8) wenigstens ein weiteres Umlenkelement (15) aufweist, wobei das wenigstens eine weitere Umlenkelement (15) dem Umlenkelement (14) entlang der Bewegungsrichtung (6) nachgeordnet ist, so dass das Endlossiebband (7) im bestimmungsgemäßen Gebrauch der Siebvorrichtung (1) von dem Umlenkelement (14) übernommen und an der zweiten Seite (11) abgegeben wird.

3. Siebvorrichtung nach einem der vorangegangenen Ansprüche,
**dadurch gekennzeichnet, dass** die erste Auffangeinrichtung (12) wenigstens eine erste Öffnung (16) und/oder wenigstens ein erstes Leitelement (17) und/oder wenigstens eine erste Sammelrinne (18) umfasst.

4. Siebvorrichtung nach einem der vorangegangenen Ansprüche,
**dadurch gekennzeichnet, dass** die zweite Auffangeinrichtung (13) wenigstens eine zweite Öffnung (19) und/oder wenigstens ein zweites Leitelement (20) und/oder wenigstens eine zweite Sammelrinne (21) umfasst.

5. Siebvorrichtung nach einem der vorangegangenen Ansprüche,
**dadurch gekennzeichnet, dass** die wenigstens eine erste Auffangeinrichtung (12), insbesondere die erste Öffnung (16) und/oder das erste Leitelement (17), und die wenigstens eine zweite Auffangeinrichtung (13), insbesondere die zweite Öffnung (19) und/oder das zweite Leitelement (20), zumindest teilweise im Bereich des Umlenkelements (14) und/oder entlang der Hochrichtung (HR) unterhalb des Umlenkelements (14) angeordnet ist.

6. Siebvorrichtung nach einem der vorangegangenen Ansprüche,
**dadurch gekennzeichnet, dass** die wenigstens eine erste Auffangeinrichtung (12), und die wenigstens eine zweite Auffangeinrichtung (13) und/oder das wenigstens eine erste Leitelement (17) und das wenigstens eine zweite Leitelement (20) entlang der Querrichtung (QR) aneinander angrenzen.

7. Siebvorrichtung nach einem der vorangegangenen Ansprüche,
**dadurch gekennzeichnet, dass** das erste Leitelement (17) und das zweite Leitelement (20) zusammen eine Leiteinheit (22) ausbilden, wobei die Leiteinheit (22) vorzugsweise dachförmig ausgebildet ist.

8. Siebvorrichtung nach einem der vorangegangenen Ansprüche,
**dadurch gekennzeichnet, dass** das erste Leitelement (17), das zweite Leitelement (20) und/oder die Leiteinheit (22) entlang der Hochrichtung (HR) oberhalb der ersten Öffnung (16) und der zweiten Öffnung (19) angeordnet ist.

9. Siebvorrichtung nach einem der vorangegangenen Ansprüche,
**dadurch gekennzeichnet, dass** das Umlenkelement (14) und das weitere Umlenkelement (15) voneinander beabstandet sind und/oder zwischen dem Umlenkelement (14) und dem weiteren Umlenkelement (15) ein Zwischenraum (32) angeordnet ist.

10. Siebvorrichtung nach einem der vorangegangenen Ansprüche,
**dadurch gekennzeichnet, dass** die Siebvorrichtung (1) wenigstens eine Reinigungseinheit (23) zum Reinigen der Siebelemente (5) umfasst,
wobei die wenigstens eine Reinigungseinheit (23) vorzugsweise der oberen Umlenkung (8), insbesondere dem Umlenkelement (14) und/oder dem Zwischenraum (32), zugeordnet ist.

11. Siebvorrichtung nach einem der vorangegangenen Ansprüche,
**dadurch gekennzeichnet, dass** die Reinigungseinheit (23) wenigstens eine Hochdruckdüse (25) zum Reinigen der Siebelemente (5) von den Verunreinigungen (2) und/oder wenigstens eine Niederdruckdüse (26) zum Abspülen und/oder Ausspülen der Wassertiere (3) von den Siebelementen (5) und/oder aus der wenigstens einen Auffangvertiefung (24) umfasst.

12. Siebvorrichtung nach einem der vorangegangenen Ansprüche,
**dadurch gekennzeichnet, dass** die Siebelemente (5) und/oder das Endlossiebband (7) wenigstens eine Auffangvertiefung (24) für die Wassertiere (3) umfasst,
wobei die wenigstens eine Auffangvertiefung (24) vorzugsweise derart ausgebildet ist, dass die Wassertiere (3) vor der wenigstens einen Reinigungseinheit (23), insbesondere der wenigstens einen Hochdruckdüse (25), geschützt sind.

13. Siebvorrichtung nach einem der vorangegangenen Ansprüche,
**dadurch gekennzeichnet, dass** wenigstens eines der Siebelemente (5) wenigstens ein Gelenk (27), insbesondere ein Drehgelenk, umfasst, mit dessen Hilfe die wenigstens eine Auffangvertiefung (24) zum Entleeren der Wassertiere (3) zumindest teilweise gedreht und/oder geöffnet werden kann.

14. Siebvorrichtung nach einem der vorangegangenen Ansprüche,
**dadurch gekennzeichnet, dass** das Umlenkelement (14) an einem ersten Umlenkbereich (28) und das weitere Umlenkelement (15) an einem zweiten Umlenkbereich (29) mit dem Endlossiebband (7) in Wirkverbindung steht, wobei der zweite Umlenkbereich (29) vorzugsweise dem ersten Umlenkbereich (28) entlang der Bewegungsrichtung (6) des Endlossiebbands (7) nachfolgt.

15. Siebvorrichtung nach einem der vorangegangenen Ansprüche,
**dadurch gekennzeichnet, dass** die wenigstens eine Hochdruckdüse (25) und/oder die wenigstens eine Niederdruckdüse (26) derart angeordnet ist, dass diese im bestimmungsgemäßen Gebrauch der Siebvorrichtung (1) auf eines der Siebelemente (5) und/oder auf die wenigstens eine Auffangvertiefung (24) im Bereich des Umlenkelements (14) und/oder dem ersten Umlenkbereich (28) einwirkt.
